Europäisches Patentamt

European Patent Office

Office européen des brevets

(19)

(11) Veröffentlichungsnummer: **0 261 476 B1**

(12) **EUROPÄISCHE PATENTSCHRIFT**

(45) Veröffentlichungstag der Patentschrift: **09.12.92**

(51) Int. Cl.⁵: **H04L 7/10**, H04B 3/23

(21) Anmeldenummer: **87112905.2**

(22) Anmeldetag: **03.09.87**

(54) Verfahren und Schaltungsanordnung zum Synchronisieren eines Taktgenerators.

(30) Priorität: **22.09.86 DE 3632118**

(43) Veröffentlichungstag der Anmeldung:
**30.03.88 Patentblatt 88/13**

(45) Bekanntmachung des Hinweises auf die
Patenterteilung:
**09.12.92 Patentblatt 92/50**

(84) Benannte Vertragsstaaten:
**AT CH DE LI NL**

(56) Entgegenhaltungen:
**EP-A- 0 133 728**
**EP-A- 0 156 348**

**TELCOM REPORT 8, 1985, Sonderheft
"Diensteintegrierendes Digitalnetz ISDN",
Seiten 21-26, München, DE; G. SCHOLLMEI-
ER: "Die Teilnehmeranschlusstechnik im
ISDN"**

(73) Patentinhaber: **SIEMENS AKTIENGESELL-
SCHAFT**
**Wittelsbacherplatz 2**
**W-8000 München 2(DE)**

(72) Erfinder: **Haass, Adolf**
**Eichelhäherstrasse 54**
**W-8000 München 60(DE)**

## Beschreibung

Die Erfindung bezieht sich auf ein Verfahren und eine Schaltungsanordnung zum Synchronisieren eines eine Sendeschaltung durch Abgabe von internen Taktimpulsen steuernden Taktgenerators mittels gesonderter Synchronisiersignale in einer die Sendeschaltung und eine Empfangsschaltung enthaltenden, für den Anschluß wenigstens eines Binärsignale abgebenden und aufnehmenden Endgerätes dienenden Anschlußschaltung, deren Sendeschaltung und deren Empfangsschaltung einerseits über eine Gabelschaltung mit einer vollduplexmäßig betreibbaren Zweidrahtübertragungsleitung und andererseits über eine ebenfalls durch Abgabe der internen Taktimpulse gesteuerten Echokompensationsschaltung verbunden sind, wobei von der zugehörigen Sendeschaltung auf das Auftreten von "1"Bits hin jeweils als Sendesignal ein Impuls mit festgelegter Amplitude, auf das Auftreten von "0"-Bits hin dagegen jeweils ein Nullpegel abgegeben wird.

Ein Verfahren und eine Schaltungsanordnung der vorstehend bezeichneten Art sind bereits bekannt (Zeitschrift "telcomreport 8 (1985), Sonderheft "Diensteintegrierendes Digitalnetz ISDN", Seiten 23 bis 28). Es hat sich gezeigt, daß dann, wenn die gesonderten Synchronisiersignale zu einer Synchronisierung des die Echokompensationsschaltung betreibenden Taktgenerators führen, die Echokompensationsschaltung die Kompensation der Echosignale nicht in jedem Falle zufriedenstellend vorzunehmen vermag. Zuweilen verbleibt beim jeweiligen Synchronisierschritt zwischen dem jeweils vorhandenen Echosignal und dem von der Echokompensationsschaltung erzeugten Kompensationssignal ein Restsignal, welches sich störend auf das Empfangssignal auswirkt. Um dennoch eine zumindest weitgehende Echosignalkompensation vorzunehmen, könnte zwar an den Einsatz kürzerer Synchronisierschritte bzw. an eine Verminderung der Abgleichgenauigkeit in der Kompensationsschaltung gedacht werden. Der Einsatz kürzerer Synchronisierschritte bedingt jedoch einen zuweilen unerwünschten zusätzlichen Schaltungsaufwand. Die Herabsetzung der Abgleichgenauigkeit in der Echokompensationsschaltung dürfte im Regelfall nicht hingenommen werden können, sie bedingt nämlich eine Verminderung der überbrückbaren Leitungslänge.

Ein Verfahren und eine Schaltungsanordnung der eingangs bezeichneten Art sind auch bereits aus EP-A-0 156 348 bekannt. Bei diesem Verfahren bzw. bei dieser Schaltungsanordnung ist ein Taktgenerator vorgesehen, der die erforderlichen Taktsignale aus den der Empfangsschaltung zugeführten, über die Zweidrahtübertragungsleitung übertragenen Nutzsignalen ableitet. Um diese Nutzsignale ohne durch Echosignale hervorgerufene Störanteile auswerten zu können, ist ein spezielles Verfahren zur Übertragung von Datensignalen über die Zweidrahtübertragungsleitung vorgesehen. Dies besteht darin, daß durch die zugehörige Sendeschaltung zu übertragende Datensignale zunächst zu Paketen zusammengefaßt und diese anschließend in codierter Form durch festgelegte signalfreie Zeitintervalle getrennt an die Gabelschaltung abgegeben werden. Durch das Vorsehen von trennenden signalfreien Zeitintervallen und durch eine zeitliche Festlegung von Sendevorgängen und Empfangsvorgängen in der Sendeschaltung und Empfangsschaltung sind unterschiedliche, periodisch wiederholt auftretende Zeitintervalle festgelegt. Der Empfangsschaltung werden dabei in ersten Zeitintervallen lediglich über die Zweidrahtübertragungsleitung übertragene Nutzsignale, in zweiten Zeitintervallen lediglich bei der Abgabe von Paketen durch die zugehörige Sendeschaltung hervorgerufene Echosignale und in dritten Zeitintervallen durch Echosignale überlagerte Nutzsignale zugeführt. Die oben erwähnten Taktsignale werden durch den Taktgenerator in nicht näher dargelegter Weise aus den in den genannten ersten Zeitintervallen auftretenden Nutzsignalen abgeleitet.

Darüber hinaus ist bereits ein Datenübertragungssystem für eine Vollduplexübertragung von Datensignalen über eine Zweidrahtübertragungsleitung vorgeschlagen worden (EP-A-0 133 728), bei welchem die Datensignale auf der Zweidrahtübertragungsleitung mit einem solchen Code übertragen werden, daß es möglich ist, für eine adaptive Koeffizienteneinstellung von Echokompensatoren solche Zeitpunkte festzulegen, zu denen über die Zweidrahtübertragungsleitung aufgenommene Empfangssignale gerade einen Nullpegel aufweisen, so daß die adaptive Koeffizienteneinstellung lediglich anhand der zu diesen Zeitpunkten auftretenden Echosignale durchgeführt werden kann.

Der Erfindung liegt demgemäß die Aufgabe zugrunde, einen Weg zu zeigen, wie bei einem Verfahren und einer Schaltungsanordnung der eingangs genannten Art der vorhandene Taktgenerator auf einfache Weise mittels gesonderter Synchronisiersignale störungsfrei synchronisiert und wie zugleich eine einwandfreie Echokompensation erzielt werden kann.

Gelöst wird die vorstehend aufgezeigte Aufgabe bei einem Verfahren der eingangs genannten Art erfindungsgemäß dadurch, daß der Anschlußschaltung als die gesonderten Synchronisiersignale externe Taktimpulse zugeführt werden, welche zusammen mit den der Sendeschaltung zugeführten Binärsignalen auftreten, daß bei der Abgabe von Sendesignalen das Auftreten von "0"-Bits kennzeichnenden Nullpegeln gesondert überwacht wird und daß die Synchronisierung des Taktgenerators auf die externen Taktimpulse erst dann freigegeben wird, nachdem von der Sendeschaltung eine festgelegte Anzal von unmittelbar aufeinanderfolgenden Nullpegeln abgegeben worden ist.

Die Erfindung bringt den Vorteil mit sich, daß auf relativ einfache Weise eine einwandfreie Synchronisierung des Taktgenerators erfolgt, und daß zugleich auch eine einwandfreie Echokompensation erzielt wird. Dadurch, daß erst nach Ababe einer festgelegten Anzahl von "0"-Bits von der zugehörigen Sendeschaltung die Synchronisierung des Taktgenerators freigegeben wird bzw. erfolgt, ist nämlich sichergestellt, daß während der betreffenden Synchronisierung praktisch kein Echosignal auftritt bzw. mehr vorhanden sein wird, welches das Empfangssignal verfälschen könnte. Eine Beeinflussung der die gesonderten Synchronisiersignale bildenden, zugeführten Taktimpulse erfolgt nämlich lediglich durch ein Echosignal, welches auf das Auftreten wenigstens eines "1"-Bits zurückgeht.

Zur Durchführung des Verfahrens gemäß der Erfindung dient vorzugsweise eine Schaltungsanordnung, wie sie im Anspruch 2 angegeben ist. Diese Schaltungsanordnung zeichnet sich durch den Vorteil eines besonders geringen schaltungstechnischen Aufwands aus, mit dem sichergestellt ist, daß eine einwandfreie Synchronisierung des Taktgenerators erfolgt.

Bei Ausgestaltung der Schaltungsanordnung gemäß der Erfindung in der im Anspruch 3 gekennzeichneten Weise ergibt sich ein relativ geringer schaltungstechnischer Aufwand hinsichtlich der Realisierung einer vorzusehenden Detektorschaltung. Die betreffende Detektorschaltung kann auf relativ einfache Weise beispielsweise zwischen ein und vier aufeinanderfolgenden "0"-Bits ermitteln, bevor sie die Synchronisierung des Taktgenerators freigibt.

Ein besonders einfacher Aufbau für die erwähnte Detektorschaltung ergibt sich dann, wenn diese in der im Anspruch 4 angegebenen Weise ausgebildet ist. In diesem Falle erfolgt eine Synchronisierung des Taktgenerators jeweils nach Auftreten eines "0"-Bits in dem von der Sendeschaltung jeweils abgegebenen Binärsignal.

Bei Ausgestaltung der Erfindung in der im Anspruch 5 gekennzeichneten Weise ergibt sich der Vorteil eines besonders geringen schaltungstechnischen Aufwands für eine vorzusehende Freigabeschaltung.

Bei Ausgestaltung der Erfindung in der im Anspruch 6 angegebenen Weise ergibt sich der Vorteil des Einsatzes eines relativ einfach aufzubauenden, dennoch aber recht genauen Taktgenerators.

Anhand von Zeichnungen wird die Erfindung nachstehend beispielsweise näher erläutert.

FIG 1 zeigt in einem Blockdiagramm eine Schaltungsanordnung gemäß der Erfindung,

FIG 2a bis 2d zeigen Impulsdiagramme, auf die im Zuge der Erläuterung der Erfindung Bezug genommen wird.

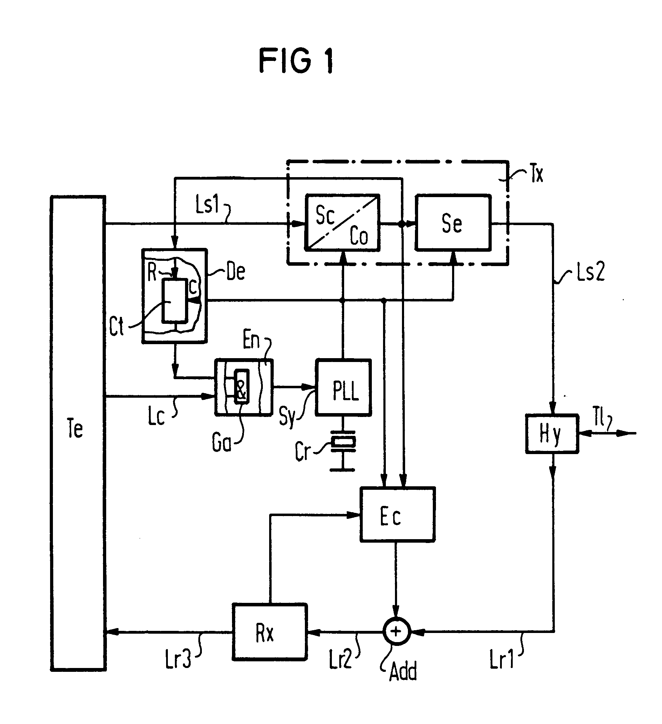

In FIG 1 ist in einem Blockdiagramm eine Schaltungsanordnung gezeigt, die eine generell als Anschlußschaltung zu bezeichnende Schaltung aufweist, an der wenigstens ein Endgerät Te angeschlossen ist, welches Binärsignale abzugeben und aufzunehmen vermag. Bei der betreffenden Anschlußschaltung kann es sich beispielsweise um eine im Basisband arbeitende Übertragungs Anschlußschaltung handeln. Bei dem Endgerät Te kann es sich um irgendein Datenendgerät handeln, welches gleichzeitig Binärsignale abzugeben und aufzunehmen vermag.

Zu der in FIG 1 dargestellten Anschlußschaltung gehören prinzipiell eine Sendeschaltung Tx und eine Empfangsschaltung Rx. Die Sendeschaltung Tx ist eingangsseitig über eine Sendeleitung Ls1 am Sendeausgang des in der Zeichnung dargestellten Endgeräts Te angeschlossen. Ausgangsseitig ist die Sendeschaltung Tx über eine Sendeleitung Ls2 mit dem Sendeeingang einer Gabelschaltung Hy verbunden. Diese Gabelschaltung Hy ist mit dem Empfangsausgang über eine Empfangsleitung Lr1 an einem Eingang eines Addierers Add angeschlossen, der ausgangsseitig über eine weitere Empfangsleitung Lr2 mit dem Eingang der Empfangsschaltung Rx verbunden ist. Die Empfangsschaltung Rx ist ausgangsseitig über eine Empfangsleitung Lr3 mit dem Empfangseingang des Endgeräts Te verbunden. Die zuvor erwähnte Gabelschaltung Hy ist mit dem Leitungsanschluß an einer vollduplexmäßig betriebenen Zweidrahtübertragungsleitung Tl angeschlossen.

Die Sendeschaltung Tx besteht im vorliegenden Fall aus zwei Teilschaltungen. Die eine, am Eingang der Sendeschaltung Tx liegende Teilschaltung umfaßt einen Scrambler Sc und einen Codierer Co; die andere Teilschaltung, die am Ausgang der Sendeschaltung Tx liegt, umfaßt den eigentlichen Sender Se der Sendeschaltung Tx. Der Sender Se ist dabei dem Codierer Co nachgeschaltet. Im übrigen kann der Aufbau der Sendeschaltung Tx so sein, wie dies an der eingangs erwähnten Stelle angegeben ist.

Mit dem Ausgang des Codierers Co ist eine Echokompensationsschaltung verbunden, zu der ein Echokompensator Ec und der bereits erwähnte Addierer Add gehören. Der Echokompensator Ec ist mit seinem Signaleingang am Ausgang des erwähnten Codi erers Co angeschlossen, und mit seinem Ausgang ist der Echokompensator Ec mit einem weiteren Eingang des bereits erwähnten Addierers Add verbunden. Mit einem Stelleingang ist der Echokompensator Ec mit einem Ausgang der Empfangsschaltung Rx verbunden; mit einem Takteingang ist der Echokompensator EC am Ausgang eines Taktgenerators angeschlossen, auf den nachstehend näher eingegangen wird.

Die Sendeschaltung Tx, genauer gesagt ihre beiden Schaltungsteile, ist bzw. sind mit entsprechenden Takteingängen am Ausgang eines Taktgenerators angeschlossen, zu dem eine quarzgesteuerte PLL-Schaltung PLL und ein Quarz Cr gehören. Dieser Taktgenerator liefert Taktimpulse, mit deren Hilfe die Sendeschaltung Tx hinsichtlich der Abgabe von Signalen gesteuert wird.

Mit einem Synchronisiereingang Sy ist die PLL-Schaltung am Ausgang einer Freigabeschaltung En angeschlossen, die beispielsweise eine Verknüpfungsschaltung enthalten kann, deren Ausgang mit dem erwähnten Synchronisiereingang Sy verbunden sein kann. Der eine Eingang der Freigabeschaltung En bzw. der Verknüpfungsschaltung Ga, bei der es sich um ein UND-Glied handeln kann, ist über eine Taktleitung Lc an einem Taktausgang des Endgerätes Te angeschlossen. Auf dieser Leitung Lc mögen beispielsweise Taktimpulse auftreten, welche der Sendeschaltung Tx und damit der gesamten Anschlußschaltung zugeführt werden, beispielsweise von einer zentralen Vermittlungseinrichtung her. Diese Taktimpulse treten zusammen mit Informationssignalen auf der Sendeleitung LS1 auf.

Ein weiterer Eingang der Freigabeschaltung En und damit der Verknüpfungsschaltung Ga ist am Ausgang einer Detektorschaltung De angeschlossen, die im vorliegenden Fall einen Zähler Ct enthält, welcher mit seinem bei Erreichen einer bestimmten Zählerstellung ein "1"-Signal abgebenden Ausgang mit den erwähnten Eingängen der Freigabeschaltung En bzw. der Verknüpfungsschaltung Ga verbunden sein mag. Der betreffende Zähler Ct kann ein Zähler sein, der beispielsweise bis vier zählt und bei Erreichen seiner Endzählerstellung solange ein "1"-Signal abgibt, bis er in seine Ausgangsstellung (Nullstellung) zurückgestellt wird. Zur Steuerung des Zählers Ct weist dieser einen Zähleingang C und einen Rücksetzeingang R auf. Der Zähleingang C ist im vorliegenden Fall mit den Sendetaktimpulsen beaufschlagt. Der Eingang R des Zählers Ct ist an dem bereits erwähnten Ausgang des Codierers Co angeschlossen. Die Anordnung ist dabei so getroffen, daß ein am Ausgang des Codierers Co auftretendes "0"-Bit den Zähler Ct über den Zähleingang C veranlaßt, einen Zählvorgang (Weiterzählen um eins) auszuführen; ein an dem betreffenden Ausgang auftretendes "1"-Bit führt indessen dazu, daß der Zähler Ct über seinen Rücksetzeingang R in seine Ausgangszählerstellung zurückgesetzt wird.

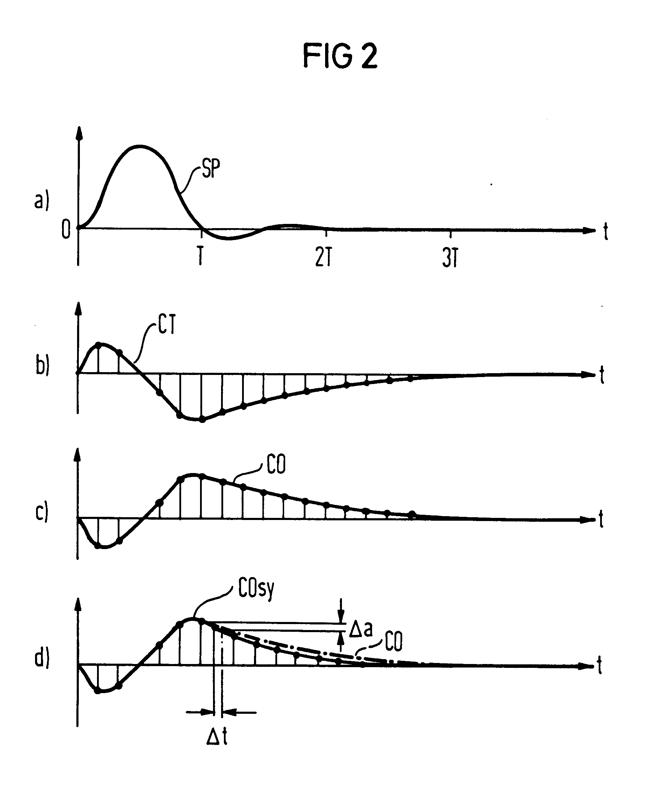

Nachdem zuvor der Aufbau der in FIG 1 dargestellten Schaltungsanordnung erläutert worden ist, sei nunmehr unter Bezugnahme auf die in FIG 2a) bis 2d) über die Zeitachse t jeweils gezeigten Impulsverläufe die Arbeitsweise dieser Schaltungsanordnung näher betrachtet. Dazu sei angenommen, daß von dem Endgerät Te Binärsignale abgegeben werden, die in durch die Taktimpulse des Taktgenerators (PLL, Cr) festgelegten Taktraster-Zeitabschnitten über die Sendeleitung Ls2 und damit über die vollduplexmäßig betriebene Zweidrahtübertragungsleitung TI abgegeben werden. Dabei werden "1"-Bits in entsprechenden Taktraster-Zeitabschnitten, welche beispielsweise durch Taktraster-Zeitpunkte T, 2T, 3T festgelegt sind, in Form von Impulsen SP (s. FIG 2a) mit festgelegten Amplituden abgegeben, während auf "0"-Bits hin in entsprechenden Taktraster-Zeitabschnitten jeweils ein Nullpegel abgegeben wird. Ein mit derartigen Bits arbeitender Code ist beispielsweise der bekannte AMI-Code. In dem betreffenden Code auftretende Binärsignale können bei der in der Zeichnung dargestellten Schaltungsanordnung von dem angedeuteten Codierer Co abgegeben werden. Der Sender Se dient dann lediglich zur Verstärkung dieser Signale bzw. Impulse.

Die von der Sendeschaltung Tx abgegebenen Signale bzw. Impulse SP (s. FIG 2a) gelangen nun nicht nur zu der vollduplexmäßig, d. h. in beiden Richtungen gleichzeitig betriebenen Zweidrahtübertragungsleitung TI hin; ein Teil dieser Signale gelangt auch über die Empfangsleitung Lr1 zu der zugehörigen Empfangsschaltung Rx hin, und zwar als sogenannte Echosignale CT (s. FIG 2b). Um diese Echosignale CT zu kompensieren, ist die bereits erwähnte Echokompensationsschaltung vorgesehen, welche aus den von der Sendeschaltung Tx abgegebenen Signalen bzw. Impulsen SP gewissermaßen Korrektursignale CO (s.FIG 2c) bildet, die subtraktiv den Echosignalen CT (s. FIG 2b) hinzuaddiert werden, so daß diese Echosignale CT am Eingang der Empfangsschaltung Rx schließlich aufgehoben sind. Die damit zusammenhängenden Vorgänge sind an sich bekannt; sie brauchen hier nicht weiter im einzelnen erläutert zu werden. Für das Verständnis der vorliegenden Erfindung dürfte es ausreichend sein, wenn berücksichtigt wird, daß eine Kompensation von Echosignalen CT im vorliegenden Fall lediglich dann erfolgt, wenn "1"-Bits von der zugehörigen Sendeschaltung Tx abgegeben werden; nur in diesem Fall kann nämlich über die Gabelschaltung Hy ein Echosignal CT auftreten, da auf "0"-Bits hin nur ein Nullpegel abgegeben wird. In diesem Zusammenhang ist noch anzumerken, daß auf die Abgabe eines "1"-Bits bzw. eines diesem entsprechenden Impulses SP (s. FIG 2a) von der Sendeschaltung Tx hin nicht nur innerhalb des Taktraster-Zeitabschnitts O-T, in welchem dieser Impuls übertragen wird, eine Echokompensation vorzunehmen ist, sondern daß infolge des Auftretens von sogenannten Nachschwingern auf diesen Impuls hin weitere Echokompensationen bezüglich dieses Impulses in nachfolgenden Taktraster-Zeitabschnitten T-2T, 2T-3T vorzunehmen sind. Alle diese Kompensationen, also sowohl des ursprünglichen Impulssignals als auch der zugehörigen Nachschwinger führen zu einer weitestgehenden Aufhebung der Echosignale.

Wenn nun der Sendeschaltung über die Leitung Lc Taktimpulse zugeführt werden, dann kann dies bei direkter Ausnutzung dieser Taktimpulse zur Synchronisierung der PLL-Schaltung zu einer entsprechend fehlerhaften Impulsantwort der Echokompensationsschaltung führen, wie dies der Kurvenverlauf COsy in FIG 2d) im Vergleich mit dem dort durch eine Strichpunktlinie angedeuteten ursprünglichen Kurvenverlauf CO erkennen läßt und zwar bedingt durch die durch die Synchronisierung des Taktes hervorgerufene Verlängerung bzw. Verkürzung t der Impulsantwort und der damit verbundenen Amplitudenänderung a (s. FIG 2d). Die Folge davon wäre, daß keine einwandfreie Echokompensation erfolgen würde und damit das auf der Leitung Lr3 abgegebene Empfangsdatensignal gestört wäre und eine entsprechend hohe Fehlerrate aufweisen würde.

Um die vorstehend aufgezeigte Schwierigkeit zu vermeiden, ist gemäß der vorliegenden Erfindung vorgesehen, erst auf das Auftreten einer festgelegten Anzahl von "0"-Bits die Synchronisierung der zu dem Taktgenerator gehörenden PLL Schaltung freizugeben. Der Zähler Ct ist so ausgelegt bzw. eingestellt, daß er beispielsweise auf das aufeinanderfolgende Auftreten von 1, 2, 3 oder 4 "0"-Bits ein "1"-Ausgangssignal abgibt, auf das hin dann die Freigabeschaltung En freigegeben ist für die Weiterleitung eines oder mehrerer Taktimpulse, die über die Leitung Lc zugeführt werden. Der Zähler Ct kann dabei so ausgelegt sein, daß er ausgangsseitig ein "1"-Signal so lange abgibt, bis seinem Rücksetzeingang R ein "1"-Bit zugeführt wird. Erst wenn der Zähler Ct wieder seine Endzählerstellung erreicht hat, wird die Freigabeschaltung En freigegeben. Damit ist eine einwandfreie Echokompensation erzielt.

Abschließend sei noch angemerkt, daß es zuweilen auch genügt, auf das Auftreten lediglich eines einzigen "0"-Bits hin die Synchronisierung der PLL-Schaltung freizugeben. In diesem Falle genügte es, wenn die Detektorschaltung De lediglich ein Negationsglied enthielte.

Im Hinblick auf die Verwendung des T aktgenerators bei der vorstehend erläuterten Schaltungsanordnung sei abschließend noch folgendes angemerkt. Grundsätzlich könnten für die Taktsteuerung der Sendeschaltung Tx die Taktimpulse herangezogen werden, die von dem Endgerät Te über die Leitung Lc bereitgestellt werden. Es ist jedoch zu berücksichtigen, daß zum Betrieb der Echokompensationsschaltung ein mehrfacher Takt - verglichen mit den auf der Leitung Lc auftretenden Taktimpulsen - verwendet werden muß, der zudem auch nur in sehr kleinen Synchronisierschritten änderbar ist. Um dennoch die Signale taktgesteuert über die Sendeschaltung Tx abgeben zu können, ist der gesonderte Taktgenerator mit der PLL-Schaltung und dem Quarz Cr vorgesehen.

**Patentansprüche**

1. Verfahren zum Synchronisieren eines eine Sendeschaltung (Tx) durch Abgabe von internen Taktimpulsen steuernden Taktgenerators (PLL, Cr) mittels gesonderter Synchronisiersignale in einer die Sendeschaltung (Tx) und eine Empfangsschaltung (Rx) enthaltenden, für den Anschluß wenigstens eines Binärsignale abgebenden und aufnehmenden Endgerätes (Te) dienenden Anschlußschaltung, deren Sendeschaltung (Tx) und deren Empfangsschaltung (Rx) einerseits über eine Gabelschaltung (Hy) mit einer vollduplex betreibbaren Zweidrahtübertragungsleitung (Tl) und andererseits über eine ebenfalls durch Abgabe der internen Taktimpulse gesteuerten Echokompensationsschaltung (Ec,Add) verbunden sind, wobei von der zugehörigen Sendeschaltung (Tx) auf das Auftreten von "1"-Bits hin jeweils als Sendesignal ein Impuls mit festgelegter Amplitude, auf das Auftreten von "0"-Bits hin dagegen jeweils ein Nullpegel (Tx) abgegeben wird,
**dadurch gekennzeichnet,**
daß der Anschlußschaltung als die gesonderten Synchronisiersignale externe Taktimpulse zugeführt werden, welche zusammen mit den der Sendeschaltung (Tx) zugeführten Binärsignalen auftreten,
daß bei der Abgabe von Sendesignalen das Auftreten von "0"-Bits kennzeichnenden Nullpegeln gesondert überwacht wird
und daß die Synchronisierung des Taktgenerators (PLL, Cr) auf die externen Taktimpulse erst dann freigegeben wird, nachdem von der Sendeschaltung (Tx) eine festgelegte Anzahl von unmittelbar aufeinanderfolgenden Nullpegeln abgegeben worden ist.

2. Schaltungsanordnung zur Durchführung des Verfahrens nach Anspruch 1, mit einer Anschlußschaltung, die eine Sendeschaltung (Tx) und eine Empfangsschaltung (Rx) aufweist, an denen wenigstens ein Binärsignale abgebendes und aufnehmendes Endgerät (Te) angeschlossen ist und die über eine Gabelschaltung (Hy) an einer vollduplex betriebenen Zweidrahtübertragungsleitung (Tl) angeschlossen sind, mit einer zwischen der Sendeschaltung (Tx) und der Empfangsschaltung (Rx) vorgesehenen Echokopmensationsschaltung (Ec, Add) und mit einem Taktgenerator (PLL, Cr), der Taktimpulse zur Steuerung der Sendeschaltung (Tx) erzeugt und der durch gesonderte Synchronisiersignale synchronisierbar ist, wobei in den durch das Taktraster der Taktimpulse des betreffenden Taktgenerators festgelegten Taktraster-Zeitabschnitten entweder für "1"-Bits kennzeichnende Impulse mit festgelegten Amplituden oder für "0"-Bits kennzeichnende Nullpegel von der Sendeschaltung abgebbar sind,

**dadurch gekennzeichnet,**

daß eine Freigabeschaltung (En) und eine Detektorschaltung (De) vorgesehen sind,

daß der Taktgenerator (PLL, Cr) am Ausgang der Freigabeschaltung (En) angeschlossen ist, die eingangsseitig einerseits die gesonderten Synchronisiersignale bildende Taktimpulse über eine Sendetaktleitung (Lc) von dem zugehörigen Endgerät (Te) her zugeführt erhält und daß die Freigabeschaltung (En) andererseits ein die Weiterleitung der betreffenden Taktimpulse ermöglichendes Freigabesignal von der Detektorschaltung (De) her zugeführt erhält, welche ein Freigabesignal erst nach Auftreten einer festgelegten Anzahl von unmittelbar aufeinanderfolgenden "0"-Bits in den von der Sendeschaltung (Tx) jeweils abgegebenen Binärsignalen abgibt.

3. Schaltungsanordnung nach Anspruch 2,
   **dadurch gekennzeichnet,**
   daß die Detektorschaltung (De) einen Zähler (Ct) enthält, der mit einem Zähleingang (C) auf das Auftreten von Taktimpulsen und mit einem Rücksetzeingang (R) auf das Auftreten von "1"-Bits in den von der Sendeschaltung (Tx) jeweils abgegebenen Binärsignalen anspricht und der ausgangsseitig mit dem Freigabeeingang der Freigabeschaltung (En) verbunden ist.

4. Schaltungsanordnung nach Anspruch 2, **dadurch gekennzeichnet,** daß die Detektorschaltung (De) durch ein Negationsglied gebildet ist.

5. Schaltungsanordnung nach einem der Ansprüche 2 bis 4,
   **dadurch gekennzeichnet**, daß die Freigabeschaltung (En) durch eine Verknüpfungsschaltung (Ga) gebildet ist, welche die ihr eingangsseitig zugeführten Signale entsprechend einer Konjuktion verknüpft.

6. Schaltungsanordnung nach einem der Ansprüche 2 bis 5,
   **dadurch gekennzeichnet**, daß der Taktgenerator (PLL, Cr) eine quarzgesteuerte PLL-Schaltung enthält.

## Claims

1. Method for the synchronisation of a clock generator (PLL, Cr), which controls a transmitter circuit (Tx) by outputting internal clock pulses, by means of separate synchronising signals in a termination circuit which contains the transmitter circuit (Tx) and a receiver circuit (Rx) and which serves for the connection of at least one terminal (Te) that outputs and receives binary signals, the transmitter circuit (Tx) and the receiver circuit (Rx) of which termination circuit are connected on the one hand via a hybrid circuit (Hy) to a two-wire transmission line (Tl) that can be operated in full-duplex mode and on the other hand via an echo compensation circuit (Ec, Add) likewise controlled by the outputting of internal clock pulses, a pulse of defined amplitude being output as transmit signal in each case by the associated transmitter circuit (Tx) in response to the occurrence of "1" bits, and a zero level (Tx) being output on the other hand in each case in response to the occurrence of "0" bits, characterized in that external clock pulses are supplied as the separate synchronising signals to the termination circuit, which clock pulses occur together with the binary signals supplied to the transmitter circuit (Tx), in that when transmit signals are output the occurrence of zero levels signifying "0" bits is monitored separately, and in that the synchronisation of the clock generator (PLL, Cr) with the external clock pulses is only enabled once a defined number of zero levels has been output in direct succession by the transmitter circuit (Tx).

2. Circuit arrangement for carrying out the method according to Claim 1, having a termination circuit which has a transmitter circuit (Tx) and a receiver circuit (Rx) to which at least one terminal (Te) that outputs and receives binary signals is connected, and which are connected via a hybrid circuit (Hy) to a two-wire transmission line (Tl) operated in full-duplex mode, having an echo compensation circuit (Ec, Add) provided between the transmitter circuit (Tx) and the receiver circuit (Rx), and having a clock generator (PLL, Cr) which generates clock pulses for controlling the transmitter circuit (Tx) and which can be synchronised by means of separate synchronising signals, it being possible for the transmitter circuit to output in the timing pattern periods defined by the timing pattern of the clock pulses of the respective clock generator either pulses of defined amplitudes signifying "1" bits or zero levels signifying "0" bits, characterised in that an enable circuit (En) and a detector circuit (De) are provided, in that the clock generator (PLL, Cr) is connected at the output of the enable circuit (En), which on the one hand receives on the input side clock pulses forming the separate synchronising signals from the associated terminal (Te) via a transmitting clock line (Lc), and in that the enable circuit (En) on the other hand receives from the detector circuit (De) an enable signal which permits the forwarding of the respective clock pulses, which detector circuit outputs an enable signal only after the occurrence of a defined number of "0" bits in direct succession in the binary signals output by the transmitter circuit (Tx) in each case.

3. Circuit arrangement according to Claim 2, characterised in that the detector circuit (De) contains a counter (Ct) which responds with a count input (C) to the occurrence of clock pulses and with a reset input (R) to the occurrence of "1" bits in the binary signals output by the transmitter circuit (Tx) in each case, and which is connected on the output side to the enable input of the enable circuit (En).

4. Circuit arrangement according to Claim 2, characterised in that the detector circuit (De) is formed by a negation element.

5. Circuit arrangement according to one of Claims 2 to 4, characterised in that the enable circuit (En) is formed by a gate circuit (Ga) which gates the signals supplied to it on the input side in accordance with a conjunction.

6. Circuit arrangement according to one of Claims 2 to 5, characterised in that the clock generator (PLL, Cr) contains a quartz-controlled PLL circuit.

**Revendications**

1. Procédé pour synchroniser un générateur de cadence (PLL,Cr), qui commande un circuit d'émission (Tx) au moyen de la délivrance d'impulsions de cadence internes, à l'aide de signaux particuliers de synchronisation dans un circuit de raccordement comportant le circuit d'émission (Tx) et un circuit de réception (Rx) et utilisé pour le raccordement d'au moins un poste terminal (Te) émettant et recevant des signaux binaires, et dont le circuit d'émission (Tx) et le circuit de réception (Rx) sont reliés, d'une part par, l'intermédiaire d'un termineur (Hy) à une ligne bifilaire de transmission (Tl) pouvant fonctionner en duplex total, et, d'autre part, par un circuit de compensation d'échos (Ec,Add) commandé également par la délivrance des impulsions de cadence interne, le circuit associé d'émission (Tx) délivrant respectivement en tant que signal d'émission, une impulsion possédant une amplitude fixe lors de l'apparition de bits "1" et au contraire respectivement un niveau zéro (Tx) lors de l'apparition de bits "0",
caractérisé par le fait
qu'au circuit de raccordement sont envoyés, en tant que signaux particuliers de synchronisation, des impulsions externes de cadence, qui apparaissent en même temps que les signaux binaires envoyés au circuit d'émission (Tx),
que, lors de la délivrance de signaux d'émission, l'apparition de niveaux zéro caractérisant des bits "0" est contrôlée de façon particulière, et
que la synchronisation du générateur de cadence (PLL, Cr) sur les impulsions de cadence externes n'est déclenchée qu'une fois que le circuit d'émission (Tx) a délivré un nombre fixé de niveaux zéro directement successifs.

2. Montage pour la mise en oeuvre du procédé suivant la revendication 1, comportant un circuit de raccordement, qui possède un circuit d'émission (Tx) et un circuit de réception (Rx) et auxquels est raccordé au moins un poste terminal (Te) émettant et recevant des signaux binaires et qui sont raccordés, par l'intermédiaire d'un termineur (Hy), à une ligne bifilaire de transmission (Tl) fonctionnant en duplex complet, un circuit de compensation d'échos (Ec,Add) prévu entre le circuit d'émission (Tx) et le circuit de réception (Rx) et un générateur de cadence (PLL,Cr), qui produit des impulsions de cadence pour la commande du circuit d'émission (Tx) et peut être synchronisé par des signaux particuliers de synchronisation, et dans lequel soit des impulsions caractérisant des bits "1" possédant des amplitudes fixées, soit des niveaux zéro caractérisant des bits "0" peuvent être émis par le circuit d'émission pendant les intervalles de temps de la trame de cadence fixés par la trame de cadence des impulsions de cadence du générateur de cadence considéré,
caractérisé par le fait
qu'il est prévu un circuit d'autorisation (En) et un circuit de détection (De),

que le générateur de cadence (PLL, Cr) est raccordé à la sortie du circuit d'autorisation (En), qui reçoit, côté entrée, d'une part des impulsions de cadence constituant les signaux de synchronisaticn particuliers, à partir du poste terminal associé (Te), par l'intermédiaire d'une ligne (Lc) de transmission de la cadence d'émission, et

que le circuit d'autorisation (En) reçoit, d'autre part, de la part du circuit de détection (De), un signal d'autorisation permettant la retransmission des impulsions de cadence considérées et qui délivre un signal d'autorisation uniquement à l'apparition d'un nombre fixé de bits "0" directement successifs, dans les signaux binaires respectivement délivrés par le circuit d'émission (Tx).

3. Montage suivant la revendication 2, caractérisé par le fait que le circuit de détection (De) comporte un compteur (Ct), qui répond par une entrée de comptage (C) lors de l'apparition d'impulsions de cadence et par une entrée de remise à zéro (R) lors de l'apparition de bits "1" dans les signaux binaires délivrés respectivement par le circuit d'émission (Tx) et qui est raccordé, côté sortie, à l'entrée d'autorisation du circuit de libération (En).

4. Montage suivant la revendication 2, caractérisé par le fait que le circuit de détection (De) est formé par un circuit de négation.

5. Montage suivant l'une des revendications 2 à 4, caractérisé par le fait que le circuit d'autorisation (En) est formé par un circuit combinatoire (Ga), qui combine les signaux qui sont envoyés à son côté entrée, conformément à la combinaison ET.

6. Montage suivant l'une des revendications 2 à 5, caractérisé par le fait que le générateur (PLL,Cr) comporte un circuit PLL piloté par quartz.

# FIG 1

# FIG 2